# EUROPEAN PATENT SPECIFICATION

(11) **EP 2 539 041 B1**
(45) Date of publication and mention of the grant of the patent: **05.10.2016**
(21) Application number: 10707167.2
(22) Date of filing: 26.02.2010
(51) Int. Cl.: B01D 46/24, B01D 51/10, B01D 53/00, B01D 53/46, B01D 53/75, C21C 5/38, C22B 7/02, C22B 19/18

(54) **APPARATUS AND METHOD FOR TREATING EXHAUST GAS CONTAINING ZINC VAPORS**
VORRICHTUNG UND VERFAHREN ZUR BEHANDLUNG VON ABGAS
APPAREIL ET PROCÉDÉ POUR TRAITER UN GAZ D'ÉCHAPPEMENT

(43) Date of publication of application: 02.01.2013
(73) Proprietor: ArcelorMittal, 1160 Luxembourg (LU)
(72) Inventor: MA, Naiyang, Munster, Indiana 46321 (US)
(74) Representative: Lavoix
(86) International application number: PCT/US2010/025553
(87) International publication number: WO 2011/106012

(56) References cited:
- EP-A1- 0 626 457
- WO-A1-2009/154088
- DE-B- 1 056 157
- FR-A5- 2 093 489
- JP-A- H03 138 312
- JP-A- 2005 331 172
- US-A- 5 032 143

## Description

### FIELD OF THE INVENTION

The invention is directed to the treatment of exhaust gases. More specifically, the invention is directed to the separation and/or removal of dust from exhaust gases and to the production of recyclable solid by-products in a basic oxygen furnace off-gas cleaning system.

### BACKGROUND

Exhaust gasses are a by-product of many industrial processes and may contain a variety of substances such as lead, cadmium, zinc, iron, and/or dioxins. Many of these substances are considered harmful to the environment and need to be cleaned before an exhaust gas may be safely vented to the atmosphere. These substances, though harmful to the environment, may be reused as raw materials as long as their concentrations in the collected solid wastes are sufficiently high. When removed from the exhaust gas, and, in the same time, separated from each other, these substances may find economic use in the originating process or at an outside facility. Therefore, the efficient treatment of exhaust gases and separation of useful substances in the process has important environmental and financial implications.

For example, the process for steel-making using a basic oxygen furnace will create an off-gas containing a number of components, including iron and zinc. After scrap steel is charged into a basic oxygen furnace, molten iron from a blast furnace is poured into the furnace, and high quality oxygen is injected into the furnace, typically using a water-cooled oxygen lance. The introduction of oxygen at high speeds causes oxidation of carbon, other impurities, and some iron in the mixture, resulting in heat production and rapid mixing. In the process of blowing oxygen, some additive materials, like flux and alloy, are added into the furnace. The scrap steel often contains zinc, which can easily evaporate in the steelmaking process. Because of the strong turbulence and the high temperatures associated with making steel, 10 - 30 kg dust per ton liquid steel can be generated from ejection of liquid slag and molten iron, vaporization of evaporable components like zinc and lead, and entrainment of additive materials. The dust is carried out with the exhaust gas.

Previous methods of treating such gases have not considered to make the exhaust gas solid wastes recyclable in the gas cleaning process. Often the exhaust gas is treated by wet scrubbers, or initially treated by gravity dust catchers and then electrostatic precipitators. This generates a mixture of dust or a sludge which often contains zinc. The zinc level in the dust or sludge is often too high to reuse in an iron or steel-making process but too low to economically treat at a zinc recovery facility. Consequently, the dust or sludge is often disposed to landfills, or occasionally recycled using a subsequent process at great expense. These subsequent processes typically mix the dust or sludge with carbon or a carbon containing substance to form a mixture which is turned into pellets or briquettes. This mixture is subsequently processed using a number of different steps, such as heating, melting, volatilization, and reoxidization, to separate out various substances.

These prior methods, however, suffer from a number of drawbacks. Disposal of the non-recyclable solid wastes is increasingly costly and may be not allowable. Combining the solid wastes with carbon or a carbon material adds expense and additional processing steps, both to form the mixture and then to separate the initial substances back out. The heating, melting, and/or volatilization of these mixtures require a large amount of heat input, resulting in additional expense, wasted resources, and further pollution. Additionally, these types of processes, as well as other methods, may not effectively remove all of the harmful substances from the exhaust gas. Prior methods are also ineffective at properly isolating and separating useful substances.

### SUMMARY

It is an object of the present invention to provide a method for the treatment of exhaust gases from a basic oxygen furnace allowing an effective removal of zinc.

The present invention is directed to a method of treating an exhaust gas. The method comprises, receiving an exhaust gas containing zinc. The exhaust gas is conditioned to achieve a desired initial temperature. Next, the exhaust gas is introduced to a cyclone filter which removes a first amount of a substance from the gas without causing zinc condensation. The gas is then communicated to a ceramic filter which removes a second amount of a substance from the gas without causing zinc condensation. The gas is then conditioned a second time, and finally communicated to a baghouse filter which removes zinc and remaining dust from the exhaust gas.

### BRIEF DESCRIPTION OF THE DRAWINGS

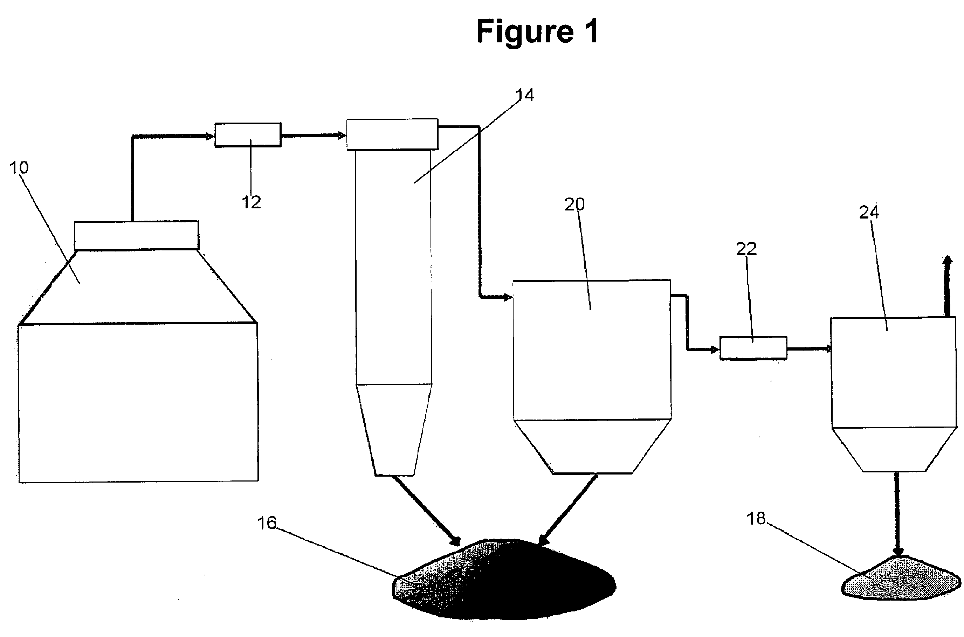

Fig. 1 is a schematic view of an exemplary exhaust gas treating apparatus.
Fig. 2 is a flow chart depicting an exemplary method of treating an exhaust gas.

### DETAILED DESCRIPTION OF EXEMPLARY EMBODIMENTS AND EXEMPLARY METHODS

Reference will now be made in detail to exemplary embodiments and methods of the invention as illustrated in the accompanying drawings, in which like reference characters designate like or corresponding parts throughout the drawings. It should be noted, however, that the invention in its broader aspects is not limited to the specific details, representative devices and methods, and illustrative examples shown and described in connection with the exemplary embodiments and methods. Specifically, though the apparatus and method may be used to treat a variety of different gases from numerous sources, exemplary embodiments of the invention will be discussed in relation to the filtering of off-gas from a basic oxygen furnace.

Using the following described apparatus and methods, substances may be separated and removed from an exhaust gas in an efficient manner. The apparatus and method described below minimize the number of devices and steps needed to effectively treat exhaust gases and reclaim valuable substances. This is especially important to maximize the value of by-products to be sold for use by an outside facility. Additionally, while prior methods and devices have been directed to off-line treatment of exhaust gas solid wastes, the disclosed invention regards an on-line process which utilizes surplus thermal energy and kinetic energy of an industrial process to assist in the treatment of the exhaust gas solid wastes.

Initially, the exhaust gas is received from an industrial process 10, for example, a basic oxygen furnace. The concentration of impurities present in the gas may vary, and for example, may be about 100 to 300 grams per cubic meter. In an exemplary embodiment, the gas is received directly from the industrial process 10, though it may undergo prior treatment or processing as necessary. When the gas is received, it enters a first conditioning unit 12. The conditioning unit 12 may perform a number of operations on the gas, for example, separation, flow adjustments, pressure adjustments, or temperature adjustments. When a temperature adjustment is involved, the gas may be heated or cooled depending upon the operating parameters of the subsequent treating devices and the initial temperature of the exhaust gas. The conditioning of the gas temperature may be accomplished using a variety of indirect or direct contact heat exchange devices. Some examples include tubular heat exchangers, plate heat exchangers, fluid heat exchangers, spray columns, and water atomizers. An exemplary embodiment of the present invention utilizes a water atomizer, such as the MicroMist™ system by EnvrioCare, to condition the exhaust gas, the specifications of which are hereby incorporated by reference. When utilizing a water atomizer, exhaust gas passes through a chamber containing spray nozzles. The nozzles direct water, which is in the form of atomized water droplets, throughout the chamber. This conditions the gas by adjusting the temperature and raising the moisture content. For example, the gas may be conditioned to about 1200 degrees Celsius as it passes through the conditioning unit 12. The gas, however, may be conditioned to different temperatures depending upon the subsequent devices.

After the initial treatment in the conditioning unit 12, the gas passes to a first filter 14. This filter 14 should be capable of removing a substance and/or particles, for example, an amount of dust, present in the exhaust gas. In an exemplary embodiment, when used in connection with basic oxygen furnace exhaust gas, the first filter 14 removes iron-rich dust 16 from the exhaust gas without causing condensation of zinc present in the gas. A number of different filters may be used to achieve the required aspects of the present invention.

One example of a filter capable of this is a cyclone filter. Cyclone filters come in a variety of suitable types having different operating parameters. An example of such is the Axial Cyclone filters available from Paul Wurth S.A., and hot cyclone filters available from Siemens VAI, the specifications of which are hereby incorporated by reference. Cyclone filters receive fluid through an angled inlet port in a housing which creates a cyclone effect, rotating the fluid around and through the inside of the housing. The fluid then turns upwards and exits through the top of the filter. The movement of the fluid uses inertia to separate heavier particles present in the exhaust gas.

In an exemplary embodiment, a hot cyclone filter is used. A hot cyclone filter may be lined with ceramic in order to handle high temperature gas. Additionally, an outside heat source may be used to adjust the internal temperature of the filter. These filters will keep the gas from cooling, and thus prevent a vaporized substance 18 present in the gas from condensing. This allows the hot cyclone filter to separate only dust 16 present in the exhaust gas. The geometry of the filter may be designed and optimized in accordance with the flow rate of the exhaust gas so that up to 50% by weight of the dust 16 present in the gas will be removed.

After exiting the first filter 14, the gas passes to a second filter 20. This filter 20 should also be capable of removing substances and/or particles from the exhaust gas, for example, dust 16 remaining in the gas after passing through the first filter 14. As with the first filter 14, this should be achieved without condensation of vaporized substances, such as zinc. In an exemplary embodiment, the second filter 20 is capable of removing almost all of the dust 16 remaining in the exhaust gas after it passes through the first filter 14. A number of different filters may be used to achieve the required aspects of the present invention.

One type of filter that may be used is a ceramic filter, such as those available under the designation Glosfume® and from Pall Corporation, the specifications of which are hereby incorporated by reference. Depending on the exhaust gas, other similar materials may be used for filter elements such as carbon filters also designed by the Pall Corporation, the specifications of which are hereby also incorporated by reference.

Ceramic filters use cartridges to remove particles present in a fluid as it passes through the filter housing. The ceramic filter include any number of cartridges, each having a filter passage which may have a variety of shapes, such as rectangular, square, or honeycomb. The cartridges can also be made from a variety of materials, including aluminum oxide, silica oxide, and silicon carbide. Ceramic filters can withstand a high operating temperature, so that the gas will not have to be cooled after exiting filter 14. Where the exhaust gas to be treated is from a basic oxygen furnace, the high temperature of the gas will prevent zinc condensation so that other substances may be effectively separated and filtered out. Because a portion of the dust 16 has already been removed by the previous filter, the ceramic filter removes up to 90% by weight of the dust 16 remaining in the exhaust gas. As an added benefit, the ceramic filter removes finer size particles present in the exhaust gas than may be removed by the cyclone filter.

After the exhaust gas has passed through the first and second filters 14,20, a majority of the dust 16 contained in the gas will have been separated out. Depending on the exhaust gas, this dust 16 may be capable of use, either in the originating industrial process or in an outside facility. Therefore, the dust 16 may be collected from the first and second filters 14, 20 for reuse. Depending on the layout, the dust 16 from the first and second filters 14, 20 may empty into the same location or into separate locations. The dust 16 may then be collected and either reused by the facility or shipped to separate locations.

In an exemplary embodiment relating to the treatment of exhaust gas from a basic oxygen furnace, the dust 16 collected by the first and second filters 14, 20 will contain high amounts of iron. This iron-rich dust may be reused in the sintering plant, which will use the dust to supplement fine iron ore charged into the sintering mixture. Because the iron-rich dust has been separated out and is substantially free of zinc, it may be used directly in the sintering plant and then a blast furnace without further processing. This increases the efficiency of the steel-making process by lowering costs and allowing reuse of waste materials.

After passing through the second filter 20, the gas enters a second conditioning unit 22. As with the first conditioning unit 12, a variety of different operations may take place. For example, the gas may again be conditioned to adjust its temperature, being heated or cooled depending on the operating parameters of the subsequent treatment device. The conditioning of the gas temperature may be accomplished using a variety of indirect or direct contact heat exchange devices. Some examples include tubular heat exchangers, plate heat exchangers, fluid heat exchangers, spray columns, and water atomizers. The second conditioning unit 22 may be of the same type as the first conditioning unit 12. In an exemplary embodiment utilizing a water atomizer, exhaust gas will pass through a chamber containing a spray nozzle. This nozzle will direct water throughout the chamber to evenly condition the temperature of the gas.

After passing through the second conditioning unit 22, the exhaust gas passes through a third filter 24. This filter 24 is designed to remove substances that remain in the exhaust gas after passing through the previous processing steps. These substances may still be vaporized in the exhaust gas or may have condensed out as a result of conditioning unit 22. In an exemplary embodiment relating to the treatment of exhaust gas from a basic oxygen furnace, the third filter 24 removes zinc 18 present in the gas. The filter 24 may be of any conventional type suitable for this purpose.

In an exemplary embodiment, the third filter 24 will be a baghouse filter such as those produced by the Aircon Corporation, Ducon, or U.S. Air Filtration, Inc., the specifications of which are hereby incorporated by reference. Baghouse filters typically use a number of fabric bags which filter out particles as an exhaust gas passes through them. Cleaned air will exit through the top of the baghouse filter, while particles fall to the bottom. Different types of baghosue filters may be used, including reverse-air, reverse-jet, and mechanical shaker types. The bags used in the filter may be made from a variety of materials including woven or felted cotton, glass fibers, or synthetic materials. The material used will depend on a number of factors, including the temperature of the gas entering the filter, the size of the particles to be filtered, gas pressure, etc. Thus, the materials used in the baghouse filter must be taken into consideration when choosing a temperature to condition the gas in the prior conditioning step. In an exemplary embodiment, the baghouse filter may have an operating temperature in the range of 260 degrees Celsius.

After passing through the third filter 24, the treated exhaust gas may be vented to the atmosphere or undergo further processing depending on the characteristics and contents of the gas. The substance 18 filtered through the third filter 24 may be collected and reused, similar to the dust 16 collected from the first two filters 14, 20. In an exemplary embodiment relating to the treatment of exhaust gas from a basic oxygen furnace, as a result of the substances already removed by the previous filters 14, 20, the substance 18 separated by the third filter 24 may contain a high concentration of zinc. Because of the high concentration of zinc, this substance 18 is useful as a raw material. The collected zinc may be sold to other industries and used for a variety of purposes such as coatings, the production of alloys, and for use in other compounds.

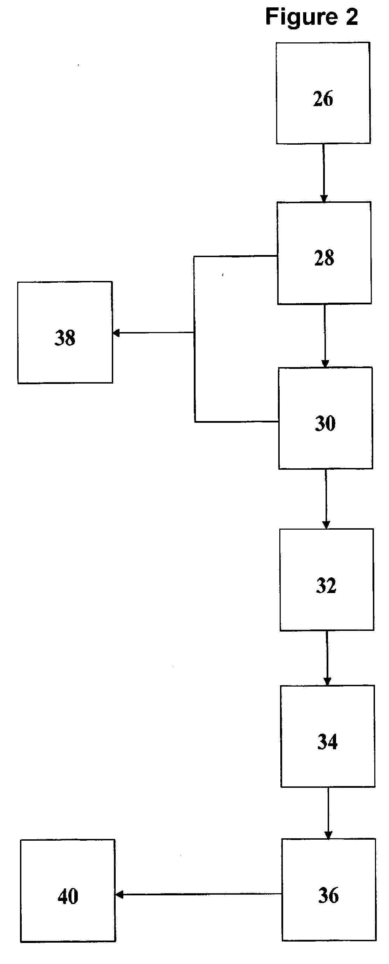

As best shown in Figure 2, in addition to the apparatus and method described above, an exemplary embodiment of the invention is directed to a method for the treatment of an exhaust gas. Initially, the gas is received in a first step 26 from an industrial process and contains zinc and an iron-rich dust. The exhaust gas is then conditioned at step 28. This first conditioning step is performed by a heat exchanger, such as a water atomizer, and conditions the gas to a temperature of about 1200 degrees Celsius which is higher than the vaporization temperature of zinc. As a result, the zinc does not condense and remains vaporized. The gas then passes through a first filter 30 which removes a first amount of a substance, such as dust containing iron. The amount removed, for example, may be up to 50% by weight. The gas then passes through a second filter 32 which removes a second amount of a substance, such as a second amount of dust. The amount removed, for example, may be up to 90% by weight of the dust remaining in the exhaust gas. The gas then undergoes a second conditioning step 34. This step conditions the gas to achieve a second temperature, for example 260 degrees Celsius. This second conditioning step 34 is also be performed by a heat exchanger, such as a water atomizer. The gas then passes through a third filter 36 which removes another substance, such as zinc contained in the gas. In additional steps, the iron-rich dust separated by the first filtering step 30 and the second filtering step 32 may be collected in step 38. Similarly, the zinc separated by the third filtering step 36 may be collected in step 40.

Those skilled in the art will understand that in basic oxygen furnace (BOF) steelmaking, dust generation is between 10 and 30 kg per ton of liquid steel; gas generation is about 101 standard cubic meters per ton of liquid steel without considering gas combustion, air infiltration and water cooling; dust concentration in gas, if not considering gas combustion, air infiltration and water cooling, is about 100-300 g per standard cubic meter; zinc vapor in gas has a partial pressure <1×10⁻² atm, mostly∼1×10⁻³ atm. A modem baghouse can operate for an extended period at 260 °C (500 °F) or more. The disclosed invention is able to operate under these conditions.

The foregoing description of the exemplary embodiments of the present invention has been presented for the purpose of illustration. It is not intended to be exhaustive or to limit the invention to the precise forms disclosed. Obvious modifications or variations are possible in light of the above teachings. The embodiments disclosed hereinabove were chosen in order to best illustrate the principles of the present invention and its practical application to thereby enable those of ordinary skill in the art to best utilize the invention in various embodiments and with various modifications as are suited to the particular use contemplated, as long as the principles described herein are followed. Thus, changes can be made in the above-described invention without departing from the intent and scope thereof. For example, different devices and steps may be added to exemplary embodiments described above without departing from the scope of the invention. Moreover, features or components of one embodiment may be provided in another embodiment. Thus, the present invention is intended to cover all such modification and variations.

## Claims

1. A method of treating an exhaust gas from a steel-making basic oxygen furnace comprising:
introducing an exhaust gas from a steel-making basic oxygen furnace containing iron-rich dust and zinc in a first conditioning unit (12) and conditioning the exhaust gas in the first conditioning unit (12) to provide conditioned exhaust gas;
introducing the conditioned exhaust gas to a cyclone filter (14) in fluid communication with and located downstream of the first conditioning unit (12) and performing a first filtering step in the cyclone filter (14) to remove a first portion of the iron-rich dust initially present in the exhaust gas from the conditioned exhaust gas and thereby provide a filtered exhaust gas;
introducing the filtered exhaust gas into a ceramic filter (20) in communication with and located downstream of the cyclone filter (14) and performing a second filtering step with the ceramic filter (20) to remove a second portion of the iron-rich dust remaining in the filtered exhaust gas after said first filtering step and thereby provide a further filtered exhaust gas;
introducing the further filtered exhaust gas into a second conditioning unit (22) in communication with and downstream of the ceramic filter (20) and conditioning the further filtered exhaust gas in the second conditioning unit (22) to provide further conditioned exhaust gas; and
introducing the further conditioned exhaust gas to a baghouse filter (24) in fluid communication with and downstream of the second conditioning unit and performing a third filtering step with the baghouse filter (24) to remove the zinc present in the further filtered exhaust gas,
wherein the cyclone filter (14) is operated at a temperature above the condensation temperature of zinc to remove the first portion of the iron-rich dust from the conditioned exhaust gas without zinc condensation, and
wherein the ceramic filter (20) is operated at a temperature above the condensation temperature of zinc to remove the second portion of the iron-rich dust from the filtered exhaust gas without zinc condensation.

2. A method according to claim 1, wherein the first filtering step removes up to 50% of the iron-rich dust initially present in the exhaust gas.

3. A method according to claim 1 or 2, wherein the second filtering removes up to 90% of the iron-rich dust present in the filtered exhaust gas after it has passed through the first filtering step.

4. A method according to any of preceding claims 1 to 3, wherein the first conditioning step conditions the exhaust gas to a temperature of about 1200 degrees Cesius and/or wherein the first conditioning step is performed by a water atomizer.

5. A method according to any of the preceding claims 1 to 4, wherein the second conditioning unit (22) is a water atomizer.

6. A method according to any of the preceding claims 1 to 5, further comprising the step of collecting the first portion of the iron-rich dust from the cyclone filter (14) and/or the step of collecting the second portion of the iron-rich dust from the ceramic filter (20).

7. A method according to claim any of the proceeding claims 1 to 6, further comprising the step of collecting the zinc from the baghouse filter (24).

8. A method according to any of the proceeding claims 1 to 7, further comprising operating the first gas conditioner (12) to condition the exhaust gas to about 1200 degrees Celsius.

9. A method according to any of the proceeding claims 1 to 8, further comprising operating the second gas conditioner (22) to condition the first conditioned exhaust gas to the operating temperature range of the baghouse filter (24).

## Patentansprüche

1. Verfahren zur Konditionierung von Abgasen von einem Sauerstoffblasofen in der Stahlproduktion umfassend:
Einleiten eines Abgases von einem Sauerstoffblasofen für die Stahlproduktion, welches eisenreichen Staub und Zink umfasst, in eine erste Konditioniereinheit (12) und Konditionieren des Abgases in der ersten Konditioniereinheit (12), um konditioniertes Abgas bereitzustellen;
Einleiten des konditionierten Abgases in einen Zyklonfilter (14), der in Fluidverbindung mit der ersten Konditioniereinheit (12) steht und dieser nachgeschaltet angeordnet ist, und Ausführen eines ersten Filterschritts in dem Zyklonfilter (14), um eine erste Menge an eisenreichem Staub, der zu Anfang in dem Abgas vorhanden ist, aus dem konditionierten Abgas zu entfernen und dadurch ein gefiltertes Abgas beireitzustellen;
Einleiten des gefilterten Abgases in einen Keramikfilter (20), welcher in Kommunikation mit dem Zyklonfilter (14) steht und diesem nachgeschaltet- angeordnet ist, und Ausführen eines zweiten Filterschrittes mit dem Keramikfilter (20), um eine zweite Menge des eisenreichen Staubs, der in dem gefilterten Abgas nach dem ersten Filterschritt zurückbleibt, zu entfernen und dadurch ein weiter gefiltertes Abgas bereitzustellen;
Einleiten des weiter gefilterten Abgases in eine zweite Konditioniereinheit (22), welche in Kommunikation mit dem Keramikfilter (20) steht und diesem nachgeschaltet angeordnet ist, und Konditionieren des weiter gefilterten Abgases in der zweiten Konditioniereinheit (22), um ein weiter konditioniertes Abgas bereitzustellen; und
Einleiten des weiter konditionierten Abgases in einen Gewebefilter (24), der in Fluidverbindung mit der zweiten Konditioniereinheit steht und dieser nachgeschaltet angeordnet ist, und Ausführen eines dritten Filterschritts mit dem Gewebefilter (24), um das Zink, das in dem weiter gefilterten Abgas vorhanden ist, zu entfernen,
wobei der Zyklonfilter (14) bei einer Temperatur über der Kondensationstemperatur von Zink betrieben wird, um die erste Menge des eisenreichen Staubs aus dem konditionierten Abgas ohne Zinkkondensation zu entfernen, und
wobei der Keramikfilter (20) bei einer Temperatur über der Kondensationstemperatur von Zink betrieben wird, um die zweite Menge des eisenreichen Staub aus dem gefilterten Abgas ohne Zinkkondensatiön zu entfernen.

2. Verfahren nach Anspruch 1, **dadurch gekennzeichnet, dass** der erste Filterschritt bis zu 50 % des eisenreichen Staubs, der zu Anfang in dem Abgas vorhanden ist, entfernt.

3. Verfahren nach Anspruch 1 oder 2, **dadurch gekennzeichnet, dass** der zweite Filterschritt bis zu 90 % des eisenreichen Staubs, der in dem gefilterten Abgas, nachdem es den ersten Filterschritt durchlaufen hat, vorhanden ist, entfernt.

4. Verfahren nach einem der vorhergehenden Ansprüche 1 bis 3, **dadurch gekennzeichnet, dass** der erste Konditionierschritt das Abgas auf eine Temperatur von ca. 1200°C konditioniert und/oder wobei der erste Konditionierschritt durch einen Wasserzerstäuber ausgeführt wird.

5. Ein Verfahren nach einem der vorhergehenden Ansprüche 1 bis 4, **dadurch gekennzeichnet, dass** die zweite Konditioniereinheit (22) ein Wasserzerstäuber ist.

6. Verfahren nach einem der vorhergehenden Ansprüche 1 bis 5, **dadurch gekennzeichnet, dass** dieses weiterhin den Schritt des Sammelns der ersten Menge an eisenreichen Staub von dem Zyklonfilter (14) und/oder den Schritt des Sammelns der zweiten Menge an eisenreichen Staub von dem Keramikfilter (20) umfasst.

7. Verfahren nach einem der vorhergehenden Ansprüche 1 bis 6, **dadurch gekennzeichnet, dass** dieses zudem den Schritt des Sammelns des Zinks von dem Gewebefilter (24) umfasst.

8. Verfahren nach einem der vorhergehenden Ansprüche 1 bis 7, **dadurch gekennzeichnet, dass** dieses außerdem das Betreiben der ersten Konditioniereinheit (12) umfasst, um das Abgas bei ca. 1200°C zu konditionieren.

9. Verfahren nach einem der vorhergehenden Ansprüche 1 bis 8, **dadurch gekennzeichnet, dass** dieses außerdem den Betrieb der zweiten Konditioniereinheit (22), um das erste konditionierte Abgas zu dem Betriebstemperaturbereich des Gewebefilters (24) zu konditionieren, umfasst.

## Revendications

1. Procédé pour traiter un gaz d'échappement provenant d'un convertisseur à l'oxygène pur pour affinage de l'acier, comprenant:
l'introduction d'un gaz d'échappement provenant d'un convertisseur à l'oxygène pur pour affinage de l'acier contenant une poussière riche en fer et du zinc dans une première unité de conditionnement (12) et le conditionnement du gaz d'échappement dans la première unité de conditionnement (12) afin de fournir un gaz d'échappement conditionné;
l'introduction du gaz d'échappement conditionné vers un filtre cyclonique (14) présentant une communication de fluide avec la première unité de conditionnement (12), et situé en aval de celle-ci, et l'exécution d'une première étape de filtration dans le filtre cyclonique (14) afin d'éliminer une première partie de la poussière riche en fer initialement présente dans le gaz d'échappement du gaz d'échappement conditionné, et afin de fournir ainsi un gaz d'échappement filtré;
l'introduction du gaz d'échappement filtré dans un filtre céramique (20) présentant une communication de fluide avec le filtre cyclonique (14), et situé en aval de celui-ci, et l'exécution d'une deuxième étape de filtration avec le filtre céramique (20) afin d'éliminer une seconde partie de la poussière riche en fer restant dans le gaz d'échappement filtré après ladite première étape de filtration, et afin de fournir ainsi un gaz d'échappement davantage filtré;
l'introduction du gaz d'échappement davantage filtré dans une deuxième unité de conditionnement (22) présentant une communication de fluide du filtre céramique (20), et située en aval de celui-ci, et le conditionnement du gaz d'échappement davantage filtré dans la deuxième unité de conditionnement (22) afin de fournir un gaz d'échappement davantage conditionné, et
l'introduction du gaz d'échappement davantage conditionné vers un filtre de chambre de filtres (24) présentant une communication de fluide avec la deuxième unité de conditionnement, et situé en aval de celle-ci, et l'exécution d'une troisième étape de filtration avec le filtre de chambre de filtres (24) afin d'éliminer le zinc présent dans le gaz d'échappement davantage filtré,
dans lequel le filtre cyclonique (14) fonctionne à une température supérieure à la température de condensation du zinc afin d'éliminer la première partie de la poussière riche en fer du gaz d'échappement conditionné sans condensation de zinc, et
dans lequel le filtre céramique (20) fonctionne à une température supérieure à la température de condensation du zinc afin d'éliminer la seconde partie de la poussière riche en fer du gaz d'échappement filtré sans condensation de zinc.

2. Procédé selon la revendication 1, dans lequel la première étape de filtration élimine jusqu'à 50% de la poussière riche en fer présente initialement dans le gaz d'échappement.

3. Procédé selon la revendication 1 ou 2, dans lequel la deuxième filtration élimine jusqu'à 90% de la poussière riche en fer présente dans le gaz d'échappement filtré après passage de celui-ci par la première étape de filtration.

4. Procédé selon l'une quelconque des revendications précédentes 1 à 3, dans lequel la première étape de conditionnement conditionne le gaz d'échappement à une température d'environ 1200 degrés Celsius, et/ou dans lequel la première étape de conditionnement est exécutée par un atomiseur à l'eau.

5. Procédé selon l'une quelconque des revendications précédentes 1 à 4, dans lequel la seconde unité de conditionnement (22) est un atomiseur à l'eau.

6. Procédé selon l'une quelconque des revendications précédentes 1 à 5, comprenant en outre l'étape de collecte de la première partie de la poussière riche en fer provenant du filtre cyclonique (14), et/ou l'étape de collecte de la seconde partie de la poussière riche en fer provenant du filtre céramique (20).

7. Procédé selon l'une quelconque des revendications précédentes 1 à 6, comprenant en outre l'étape de collecte du zinc provenant du filtre de chambre de filtres (24).

8. Procédé selon l'une quelconque des revendications précédentes 1 à 7, comprenant en outre le fonctionnement du premier conditionneur de gaz (12) afin de conditionner le gaz d'échappement à environ 1200 degrés Celsius.

9. Procédé selon l'une quelconque des revendications précédentes 1 à 8, comprenant en outre le fonctionnement du second conditionneur de gaz (22) afin de conditionner le premier gaz d'échappement conditionné à la plage de températures de service du filtre de chambre de filtres (24).
